# EUROPÄISCHE PATENTSCHRIFT

(11) **EP 2 584 287 B1**
(45) Veröffentlichungstag und Bekanntmachung des Hinweises auf die Patenterteilung: **27.01.2016**
(21) Anmeldenummer: 11186086.2
(22) Anmeldetag: 21.10.2011
(51) Int. Cl.: F25B 15/04

(54) **Kreisprozess zum Betrieb einer Absorptionskältemaschine und Absorptionskältemaschine**
Circuit process for operating an absorption cooling machine and absorption cooling machine
Cycle destiné au fonctionnement d'une machine de refroidissement par absorption et machine de refroidissement par absorption

(43) Veröffentlichungstag der Anmeldung: 24.04.2013
(73) Patentinhaber: AGO AG Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 2 372 273
- EP-A2- 0 853 220
- JP-A- 2009 299 936
- US-A- 4 314 668

## Beschreibung

Die Erfindung betrifft zum Einen einen Kreisprozess zum Betrieb einer Absorptionskältemaschine, wobei eine reiche Lösung auf einem Hochdruckniveau in einem Austreiber zunächst derart Wärme aufnimmt, dass ein Kältemittel gasförmig entweicht, wobei aus einer verbleibenden armen Lösung zunächst die reiche Lösung in einem Lösungswärmetauscher Wärme aufnimmt und dann die arme Lösung auf ein Niederdruckniveau entspannt, in einem Absorber das Kältemittel wieder in der armen Lösung gelöst und die dadurch wiederhergestellte reiche Lösung auf das Höchdruckniveau wieder verdichtet und in den Austreiber gefördert wird, und wobei das entwichene Kältemittel, bevor es in der armen Lösung wieder gelöst wird, in einem Kondensator zunächst verflüssigt, dann auf das Niederdruckniveau entspannt wird und in einem Verdampfer unter Aufnahme von Umgebungswärme verdampft. Weiterhin betrifft die Erfindung eine Absorptionskältemaschine, die in einem Lösungskreislauf einen Absorber, eine Lösungspumpe, einen Lösungswärmetauscher, einen Austreiber mit einer Heizvorrichtung und ein Lösungsventil sowie Lösungsleitungen zum Leiten einer reichen Lösung auf einem Niederdruckniveau von dem Absorber durch die Lösungspumpe und von dort auf einem Hochdruckniveau über den Lösungswärmetauscher zu dem Austreiber, und einer armen Lösung auf dem Hochdruckniveau von dem Austreiber über den Lösungswärmetauscher in das Lösungsventil und von dort auf dem Niederdruckniveau zu dem Absorber, sowie in einem Kältemittelzweig einen Kondensator, ein Expansionsventil und einen Verdampfer, sowie Kältemittelleitungen zum Leiten eines Kältemittels auf dem Hochdruckniveau aus dem Austreiber durch den Kondensator in das Expansionsventil und von dort auf dem Niederdruckniveau durch den Verdampfer in den Absorber aufweist.

Absorptionskältemaschinen ermöglichen die technische Nutzung von Niedertemperaturwärme ab 90 °C, beispielsweise industrielle Abwärme aus Blockheizkraftwerken, aus der thermischen Nachverbrennung oder aus Biomasse- und Biogasanlagen sowie solare Wärme mit Wasser, Dampf oder Thermoöl als Wärmeträger. Gegenüber der Kompressionskältemaschine substituiert diese "minderwertige" thermische Energieform in der Absorptionskältemaschine die Verwendung mechanischer Antriebe - also elektrischer Antriebe oder Verbrennungsmotoren. In der Absorptionskältemaschine kommen mechanische Antriebe im Wesentlichen nur noch zum Antrieb der Lösungspumpe zwischen Absorber und Austreiber zum Einsatz.

Ein Kreisprozess und eine Absorptionskältemaschine der vorgenannten Art sind beispielsweise aus dem Produktspektrum der Anmelderin unter der Bezeichnung "congelo" bekannt. Die bekannte Absorptionskältemaschine setzt Wasser als Lösungsmittel und Ammoniak als Kältemittel ein und realisiert so in einem Nutztemperaturbereich bis -10 °C je Modul Kälteleistungen von 50 kW bis 1 MW, in Kaskadenkälteanlagen bis -30 °C. Weiterhin sind Absorptionskältemaschinen mit Lithiumbromid als Lösungsmittel und Wasser als Kältemittel allgemein bekannt.

In dem bekannten Kreisprozess weist der aus dem Austreiber austretende Wärmeträger abhängig vom Betriebspunkt der bekannten Absorptionskältemaschine unterschiedliche Temperaturen auf. Bei Kopplung an ein Blockheizkraftwerk (BHKW) sinkt mit ansteigender Temperatur des aus den Austreiber austretenden Wärmeträgers die Kühlung des BHKW. Wenn das BHKW keine anderweitige Kühlung aufweist, so muss es die Leistung reduzieren um eine Beschädigung zu vermeiden.

### Aufgabe

Der Erfindung liegt die Aufgabe zugrunde, die im Austreiber aufgenommene Wärme zu regeln.

### Lösung

Ausgehend von dem bekannten Kreisprozess wird nach der Erfindung vorgeschlagen, dass mindestens ein Bypassstrom der reichen Lösung an dem Lösungswärmetauscher vorbei strömt. Der Bypassstrom nimmt am Lösungswärmetauscher keine Wärme aus der armen Lösung auf. Durch Mischen des Bypassstroms mit dem im Lösungswärmetauscher erwärmten Strom der reichen Lösung kann die Temperatur der reichen Lösung, die von der reichen Lösung im Austreiben aufgenommene Wärme und damit unmittelbar die Temperatur des Wärmeträgers am Austritt aus dem Austreiber eingestellt werden.

Das weiteren wird in einem erfindungsgemäßen Kreisprozess der Anteil des mindestens einen Bypassstroms an der reichen Lösung automatisch derart geregelt, dass eine Temperatur eines Wärmeträgers, aus dem die reiche Lösung in dem Austreiber Wärme aufnimmt, beim Austritt aus dem Austreiber einen Maximalwert nicht übersteigt. Alternativ kann der Bypass darüber hinaus derart geregelt sein, dass diese Temperatur im Wesentlichen konstant bleibt. Die automatische Regelung ermöglicht den Betrieb eines solchen erfindungsgemäßen Kreisprozesses bei während des Betriebs wechselnden Betriebspunkten. Insbesondere vermeidet ein solcher erfindungsgemäßer Kreisprozess bei wechselnden Betriebspunkten die Gefährdung eines angeschlossenen BHKW durch mangelnde Kühlung.

Vorteilhafter Weise nimmt der mindestens eine Bypassstrom in einem erfindungsgemäßen Kreisprozess auf dem Hochdruckniveau Wärme aus dem gasförmig aus der reichen Lösung entwichenen Kältemittel auf dem Hochdruckniveau auf. Aus den bekannten Absorptionskältemaschinen sind Dephlegmatoren bekannt, die mindestens ein fest eingestellter Teilstrom der reichen Lösung vor dem Lösungswärmetauscher durchströmt. Indem erfindungsgemäß die im Dephlegmator erwärmte reiche Lösung nicht durch den Lösungswärmetauscher geführt wird, wird in diesem die Temperaturdifferenz und mit dieser der Wirkungsgrad des Lösungswärmetauschers erhöht.

Bevorzugt wird in einem solchen erfindungsgemäßen Kreisprozess der Anteil des mindestens einen Bypassstroms an der reichen Lösung automatisch derart geregelt, dass eine Temperatur des gasförmig aus der reichen Lösung entwichenen Kältemittels beim Eintritt in den Kondensator konstant bleibt. Die Temperatur des gasförmigen Kältemittels beim Austritt aus dem Dephlegmator bestimmt den Anteil des aus diesem auskondensierenden Lösungsmittels. In einem solchen erfindungsgemäßen Kreisprozess bleibt im Niederdruckniveau der Anteil des Lösungsmittels in dem Kältemittel konstant.

In einer vorteilhaften Ausprägung eines erfindungsgemäßen Kreisprozesses ist das Kältemittel Ammoniak und ein Lösungsmittel in der Lösung Wasser. Durch die Verwendung von Ammoniak als Kältemittel können Nutztemperaturbereiche bis -30 °C erreicht werden. Alternativ können in einem erfindungsgemäßen Kreisprozess auch Lithiumbromid als Lösungsmittel und Wasser als Kältemittel zum Einsatz kommen.

Besonders bevorzugt nimmt das gasförmige Kältemittel auf dem Niederdruckniveau Wärme aus dem flüssigen Kältemittel auf dem Hochdruckniveau auf. Der Einsatz solcher Kältemittelwärmetauscher erhöht den energetischen Wirkungsgrad des erfindungsgemäßen Kreisprozesses.

Ausgehend von der bekannten Absorptionskältemaschine wird nach der Erfindung vorgeschlagen, mindestens eine Bypassleitung vorzusehen, durch die ein Bypassstrom der reichen Lösung parallel zu dem Lösungswärmetauscher führbar ist. Die erfindungsgemäße Absorptionskältemaschine ermöglicht den Betrieb mit einem erfindungsgemäßen Kreisprozess und zeichnet sich durch die dort aufgeführten Vorteile aus.

In einer vorteilhaften Ausprägung weist eine erfindungsgemäße Absorptionskältemaschine mindestens ein Regelventil vor dem Lösungswärmetauscher auf, mittels dessen der Bypassstrom aus der reichen Lösung in die mindestens eine Bypassleitung abführbar ist.

Bevorzugt führt in einer erfindungsgemäßen Absorptionskältemaschine die mindestens eine Bypassleitung über einen Dephlegmator, in dem mittels der reichen Lösung dem entwichenen gasförmigen Kältemittel Wärme entziehbar ist.

### Ausführungsbeispiel

Die Erfindung wird nachfolgend anhand eines Ausführungsbeispiels erläutert. Die in der Zeichnungsfigur in einer Prinzipskizze gezeigte erfindungsgemäße Absorptionskältemaschine 1 weist in einem Lösungkreislauf 2 einen Absorber 3, eine Lösungspumpe 4, einen Austreiber 5, ein Lösungsventil 6 und Lösungsleitungen 7 auf. Der Absorber 3 und der Austreiber 5 sind jeweils als Edelstahl-Plattenwärmetauscher ausgebildet.

Durch die Lösungsleitungen 7 strömt im Betrieb der Absorptionskältemaschine 1 eine reiche Lösung auf einem Niederdruckniveau von dem Absorber 3 durch die Lösungspumpe 4 und von dort in einem Hochdruckteil 8 auf einem Hochdruckniveau zu dem Austreiber 5, sowie eine arme Lösung auf dem Hochdruckniveau von dem Austreiber 5 in das Lösungsventil 6 und von dort auf dem Niederdruckniveau zu dem Absorber 3. Durch einen Bypass 9 mit Bypassleitungen 10 und einer Umwälzpumpe 11 wird die reiche Lösung auf dem Niederdruckniveau aus dem Absorber 3 ab- und wieder in diesen hinein geführt.

Der Austreiber 5 weist einen Wärmeträgerzulauf 12 und einen Wärmeträgerablauf 13 für einen Wärmeträger auf. In dem Hochdruckteil 8 weist die Absorptionskältemaschine 1 einen Lösungswärmetauscher 14 und einen Dephlegmator 15 auf, mittels derer im Betrieb Wärme aus der armen Lösung und aus dem aus der reichen Lösung entweichenden Kältemittel auf die reiche Lösung übertragen wird.

Die Absorptionskältemaschine 1 weist in einem Kältemittelzweig 16 eine Rektifikationskolonne 17, einen Kondensator 18, ein Expansionsventil 19, einen Verdampfer 20 und Kältemittelleitungen 21 auf. Durch die Kältemittelleitungen 21 strömt im Betrieb ein Kältemittel auf dem Hochdruckniveau aus dem Austreiber 5 zunächst durch die Rektifikationskolonne 17. Dort sinkt mit zunehmender Höhe die Temperatur und das im verdampften Kältemittel ein weiterer Anteil verbliebenen Lösungsmittels kondensiert aus. Im Dephlegmator 15 wird der Kältemitteldampf weiter abgekühlt, wodurch noch enthaltenes Lösungsmittel nahezu vollständig auskondensiert und in die Rektifikationskolonne 17 tropft.

Das Kältemittel strömt weiter in den Kondensator 18, wird dort verflüssigt und im Expansionsventil 19 auf das Niederdruckniveau entspannt. Anschließend wird das flüssige Kältemittel im Verdampfer 20 verdampft und gasförmig in den Absorber 3 geführt. Der Verdampfer 20 weist einen Kälteträgerzulauf 22 und einen Kälteträgerablauf 23 für einen Kälteträger auf. Der Kondensator 18 und der Absorber 3 sind jeweils als Edelstahl-Plattenwärmeüberträger ausgebildet und weisen je einen Kühlmittelzulauf 24 und einen Kühlmittelablauf 25 für ein Kühlmittel auf.

Zwischen Hochdruckteil 8 und dem nicht ausdrücklich gekennzeichneten Niederdruckteil weist die Absorptionskältemaschine 1 einen Kältemittelwärmetauscher 26 auf, mittels dessen im Betrieb Wärme aus dem flüssigen Kältemittel auf dem Hochdruckniveau auf das gasförmige Kältemittel auf dem Niederdruckniveau übertragen wird.

Im Betrieb der erfindungsgemäßen Absorptionskältemaschine 1 kommen als Kältemittel Ammoniak und in der Lösung als Lösungsmittel Wasser zum Einsatz. Das Hochdruckniveau liegt bei 12,4 bar, das Niederdruckniveau bei 3,3 bar. Die Kondensationstemperatur des Kältemittels auf dem Hochdruckniveau beträgt 32 °C, seine Verdampfungstemperatur auf dem Niederdruckniveau -7 °C.

Die Lösungspumpe 4 nimmt eine elektrische Leistung von 7,73 kW auf und pumpt die reiche Lösung in einem Volumenstrom von 6,42 m³/h, das entspricht einem Massenstrom von 1,49 kg/s. Die Umwälzpumpe 11 nimmt eine elektrische Leistung von 0,51 kW auf und wälzt die reiche Lösung in einem Volumenstrom von 12,85 m³/h um. Am Austreiber 5 wird ein Kältemittelmassenstrom von 0,13 kg/s in den Kältemittelzweig 16 abgeführt.

Dem Austreiber 5 wird am Wärmeträgerzulauf 12 als Wärmeträger Heisswasser mit einer Vorlauftemperatur von etwa 93 °C in einem Volumenstrom von 22 m³/h zugeführt, die Rücklauftemperatur am Wärmeträgerablauf 13 ist auf konstant 83 °C eingestellt. In einem mittleren Betriebspunkt wird dem Verdampfer 20 am Kälteträgerablauf 23 als Kältemittel Kühlsole mit einer Vorlauftemperatur (bezogen auf das angeschlossene, nicht dargestellte Kühlaggregat) von -3 °C in einem Volumenstrom von 22 m³/h entnommen, die Rücklauftemperatur am Kälteträgerzulauf 22 liegt bei +3 °C. Die Heizleistung liegt in dem mittleren Betriebspunkt bei 250 kW, die Kälteleistung bei 150 kW und das Wärmeverhältnis Q₀/Q_{H} bei 0,58.

In dem mittleren Betriebspunkt wird dem Kondensator 18 und dem Absorber 3 jeweils an den Kühlmittelzuläufen als Kühlmittel Wasser mit einer Vorlauftemperatur von 25 °C in einem Gesamtvolumenstrom von 67 m³/h zugeführt, die mittlere Rücklauftemperatur hinter den Kühlmittelabläufen liegt bei 30 °C. Das entspricht einer Rückkühlleistung in dem mittleren Betriebspunkt von 392 kW.

In der Lösungsleitung 7 weist die erfindungsgemäße Absorptionskältemaschine 1 zwischen der Lösungspumpe 4 und dem Lösungswärmetauscher 14 ein erstes Regelventil 27 auf. Das erste Regelventil 27 ist ein motorgetriebenes Dreiwegeventil, mit dem ein Bypassstrom aus der reichen Lösung abgezweigt, über eine erste Bypassleitung 28 durch den Dephlegmator 15 geführt und hinter dem Lösungswärmetauscher 14 wieder mit der übrigen reichen Lösung zusammengeführt werden kann. Das erste Regelventil 27 vergrößert den Anteil des aus der reichen Lösung abgezweigten Bypassstroms, wenn die Temperatur des gasförmigen Kältemittels in der Kältemittelleitung 27 zwischen dein Dephlegmator 15 und dem Kondensator 18 einen eingestellten Wert um mehr als 2 °C übersteigt und verringert diesen, wenn sie um mehr als 2 °C unter den eingestellten Wert sinkt.

Zwischen dem ersten Regelventil 27 und dem Lösungswärmetauscher 14 zweigt in der erfindungsgemäßen Absorptionskältemaschine 1 aus der Lösungsleitung 7 eine zweite Bypassleitung 29 mit einem zweiten Regelventil 30 ab, über die ein weiterer Bypassstrom aus der reichen Lösung abgezweigt werden kann. Das zweite Regelventil 30 ist ein motorgetriebenes Zweiwegeventil. Der weitere Bypassstrom wird bei geöffnetem zweiten Regelventil 30 durch die Druckdifferenz über dem Lösungswärmetauscher durch die zweite Bypassleitung 29 getrieben und gleichfalls hinter dem Lösungswärmetauscher 14 wieder mit der übrigen reichen Lösung zusammengeführt. Das zweite Regelventil 30 öffnet, wenn die Rücklauftemperatur des Wärmeträgers aus dem Austreiber 5 den eingestellten Wert um mehr als 2 °C übersteigt und schließt, wenn sie um mehr als 2 °C unter den eingestellten Wert sinkt.

In den Figuren sind
- 1: Absorptionskältemaschine
- 2: Lösungskreislauf
- 3: Absorber
- 4: Lösungspumpe
- 5: Austreiber
- 6: Lösungsventil
- 7: Lösungsleitung
- 8: Hochdruckteil
- 9: Bypass
- 10: Bypassleitung
- 11: Umwälzpumpe
- 12: Wärmeträgerzulauf
- 13: Wärmeträgerablauf
- 14: Lösungswärmetauscher
- 15: Dephlegmator
- 16: Kältemittelzweig
- 17: Rektifikationskolonne
- 18: Kondensator
- 19: Expansionsventil
- 20: Verdampfer
- 21: Kältemittelleitung
- 22: Kälteträgerzulauf
- 23: Kälteträgerablauf
- 24: Kühlmittelzulauf
- 25: Kühlmittelablauf
- 26: Kältemittelwärmetauscher
- 27: Regelventil
- 28: Bypassleitung
- 29: Bypassleitung
- 30: Regelventil

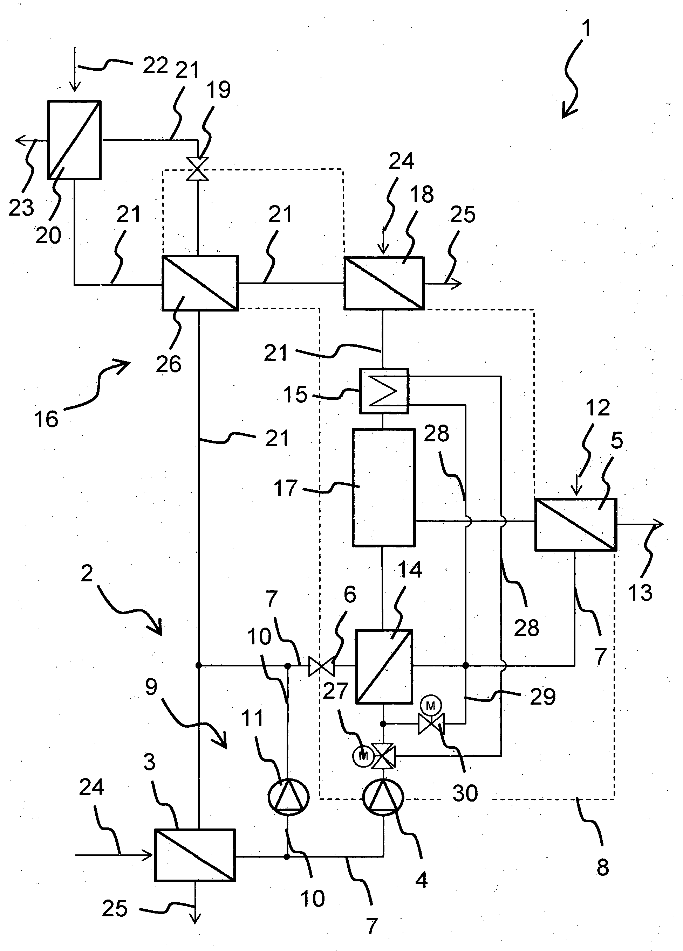

## Patentansprüche

1. Kreisprozess zum Betrieb einer Absorptionskältemaschine (1), wobei eine reiche Lösung auf einem Hochdruckniveau in einem Austreiber (5) zunächst derart Wärme aufnimmt, dass ein Kältemittel gasförmig entweicht, wobei aus einer verbleibenden armen Lösung zunächst die reiche Lösung in einem Lösungswärmetauscher (14) Wärme aufnimmt und dann die arme Lösung auf ein Niederdruckniveau entspannt, in einem Absorber (3) das Kältemittel wieder in der armen Lösung gelöst und die dadurch wiederhergestellte reiche Lösung auf das Hochdruckniveau wieder verdichtet und in den Austreiber (5) gefördert wird, und wobei das entwichene Kältemittel, bevor es in der armen Lösung wieder gelöst wird, in einem Kondensator (18) zunächst verflüssigt, dann auf das Niederdruckniveau entspannt wird und in einem Verdampfer (20) unter Aufnahme von Umgebungswärme verdampft, wobei mindestens ein Bypassstrom der reichen Lösung an dem Lösungswärmetauscher (14) vorbei strömt, *dadurch gekennezeichnet, dass* der *A*nteil des mindestens einen Bypassstroms an der reichen Lösung automatisch derart geregelt wird, dass eine Temperatur von Heisswasser, aus dem die reiche Lösung in dem Austreiber (5) Wärme aufnimmt, beim Austritt aus dem Austreiber (5) einen Maximalwert nicht übersteigt.

2. Kreisprozess nach dem vorgenannten Anspruch, ***dadurch gekennzeichnet, dass*** der mindestens eine Bypassstrom auf dem Hochdruckniveau Wärme aus dem gasförmig aus der reichen Lösung entwichenen Kältemittel auf dem Hochdruckniveau aufnimmt.

3. Kreisprozess nach dem vorgenannten Anspruch, ***dadurch gekennzeichnet, dass*** der Anteil des mindestens einen Bypassstroms an der reichen Lösung automatisch derart geregelt wird, dass eine Temperatur des gasförmig aus der reichen Lösung entwichenen Kältemittels beim Eintritt in den Kondensator (18) konstant bleibt.

4. Kreisprozess nach einem der vorgenannten Ansprüche, ***dadurch gekennzeichnet, dass*** das Kältemittel Ammoniak und ein Lösungsmittel in der Lösung Wasser ist.

5. Kreisprozess nach einem der vorgenannten Ansprüche, ***dadurch gekennzeichnet, dass*** das gasförmige Kältemittel auf dem Niederdruckniveau Wärme aus dem flüssigen Kältemittel auf dem Hochdruckniveau aufnimmt

6. Absorptionskältemaschine (1), die in einem Lösungskreislauf einen Absorber (3), eine Lösungspumpe (4), einen Lösungswärmetauscher (14), einen Austreiber (5) mit einer Heizvorrichtung und ein Lösungsventil (6) sowie Lösungsleitungen (7) zum Leiten einer reichen Lösung auf einem Niederdruckniveau von dem Absorber (3) durch die Lösungspumpe (4) und von dort auf einem Hochdruckniveau über den Lösungswärmetauscher (14) zu dem Austreiber (5), und einer armen Lösung auf dem. Hochdruckniveau von dem Austreiber (5) über den Lösungswärmetauscher (14) in das Lösungsventil (6) und von dort auf dem Niederdruckniveau zu dem Absorber (3), sowie mindestens eine Bypassleitung (28, 29), durch die ein Bypassstrom der reichen Lösung parallel zu dem Lösungswärmetauscher (14) führbar ist, sowie in einem Kältemittelzweig (16) einen Kondensator (18), ein Expansionsventil (19) und einen Verdampfer (20), sowie Kältemittelleitungen (21) zum Leiten eines Kältemittels auf dem Hochdruckniveau aus dem Austreiber (5) durch den Kondensator (18) in das Expansionsventil (19) und von dort auf dem Niederdruckniveau durch den Verdampfer (20) in den Absorber (3) aufweist, ***gekennzeichnet durch*** mindestens ein Regelventil (27, 30) vor dem Lösungswärmetauscher (14), mittels dessen zum Regeln einer Temperatur von Heisswasser, aus dem die reiche Lösung in dem Austreiber (5) Wärme aufnimmt, beim Austritt aus dem Austreiber (5) der Bypassstrom aus der reichen Lösung in die mindestens eine Bypassleitung (28, 29) abführbar ist.

7. Absorptionskältemaschine (1) nach dem vorgenannten Anspruch, ***dadurch gekennzeichnet, dass*** die mindestens eine Bypassleitung (28, 29) über einen Dephlegmator (15) führt, in dem mittels der reichen Lösung dem entwichenen gasförmigen Kältemittel Wärme entziehbar ist.

## Claims

1. A circulatory process for operating an absorption refrigerator (1), wherein a rich solution initially absorbs heat under high pressure in a separator (5) in such manner that a refrigerant is discharged in gaseous form, wherein the rich solution initially absorbs heat from a remaining lean solution in a solution heat exchanger (14), and the lean solution is then decompressed to a low pressure level, the refrigerant is again dissolved in the lean solution in an absorber (3), and the rich solution reconstituted thereby is again compressed to the high pressure level and passed to the separator (5), and wherein the discharged refrigerant is first liquefied in a condenser (18) before being dissolved in the lean solution again, and then decompressed to the low pressure level and evaporated by absorbing ambient heat in an evaporator (20), wherein at least one bypass stream of the rich solution bypasses the solution heat exchanger (14), **characterized in that** the fraction of the rich solution in the at least one bypass stream is regulated automatically in such manner that a temperature of hot water from which the rich solution absorbs heat in the separator (5) does not exceed a maximum value at the exit from the separator (5).

2. The circulatory process according to the preceding claim, **characterized in that** the at least one bypass stream absorbs heat at the high pressure level from the gaseous refrigerant that has been separated from the rich solution at the high pressure level.

3. The circulatory process according to the preceding claim, **characterized in that** the fraction of the rich solution in the at least one bypass stream is regulated automatically in such manner that a temperature of the gaseous refrigerant that has been separated from the rich solution remains constant at the inlet to the condenser (18).

4. The circulatory process according to any one of the preceding claims, **characterized in that** the refrigerant is ammonia and a solvent in the solution is water.

5. The circulatory process according to any one of the preceding claims, **characterized in that** the gaseous refrigerant at the low pressure level absorbs heat from the liquid refrigerant at the high pressure level.

6. An absorption refrigerator (1) comprising in a solution circuit an absorber (3), a solution heat exchanger (14), a separator (5) having a heating device and a solution valve (6) and solution lines (7) for forwarding a rich solution through the solution pump (4) from the absorber (3) at a low pressure level, and from there to the separator (5) via the solution heat exchanger (14) at a high pressure level, and for forwarding a lean solution from the separator (5) to the solution valve (6) via the solution heat exchanger (14) at the high pressure level, and from there to the absorber (3) at the low pressure level, and at least one bypass line (28, 29), through which a bypass stream of the rich solution may be forwarded parallel to the solution heat exchanger (14), and in a refrigerant branch (16) a condenser (18), an expansion valve (19) and an evaporator (20), and refrigerant lines (21) for transporting a refrigerant from the separator (5) to the expansion valve (19) via the condenser (18) at the high pressure level, and from there to the absorber (3) through the evaporator (20) at the low pressure level, **characterized by** at least one regulating valve (27, 30) disposed upstream of the solution heat exchanger (14), by means of which the bypass stream can be diverted at the outlet from the separator (5) from the rich solution into the at least one bypass line (28, 29) in order to regulate a temperature of hot water from which the rich solution absorbs heat in the separator (5).

7. The absorption refrigerator (1) according to the preceding claim, **characterized in that** the at least one bypass line (28, 29) passes through a reflux condenser (15) in which heat can be extracted from the discharged gaseous refrigerant by means of the rich solution.

## Revendications

1. Procédé cyclique pour le fonctionnement d'une machine frigorifique à absorption (1), pour lequel une solution riche à un niveau de haute pression dans un bouilleur (5) absorbe d'abord de la chaleur de telle manière qu'un frigorigène se dégage sous forme gazeuse, pour lequel la solution riche absorbe de la chaleur d'abord dans un échangeur de chaleur de solution (14) à partir d'une solution pauvre résiduelle et ensuite la solution pauvre est détendue à un niveau de basse pression, le frigorigène est dissous dans un absorbeur (3) dans la solution pauvre et la solution riche rétablie de ce fait au niveau de haute pression est à nouveau comprimée et est transportée dans le bouilleur (5) et pour lequel le frigorigène dégagé, avant d'être à niveau dissous dans la solution pauvre, est d'abord fluidifié dans un condensateur (18), puis est détendu au niveau de basse pression et s'évapore dans un évaporateur (20) en absorbant de la chaleur ambiante, pour lequel au moins un courant de dérivation de la solution riche s'écoule sur l'échangeur de chaleur de solution (14), **caractérisé en ce que** la part d'au moins un courant de dérivation est automatiquement réglée sur la solution riche de telle manière qu'une température d'eau chaude, à partir de laquelle la solution riche absorbe de la chaleur dans le bouilleur (5), ne dépasse pas une valeur maximale à la sortie du bouilleur (5).

2. Procédé cyclique selon la revendication précédente, **caractérisé en ce qu'**au moins un courant de dérivation au niveau de haute pression absorbe de la chaleur du frigorigène au niveau de haute pression, dégagé de la solution riche sous forme gazeuse.

3. Procédé cyclique selon la revendication précédente, **caractérisé en ce que** la part d'au moins un courant de dérivation est réglée automatiquement sur la solution riche de telle manière qu'une température du frigorigène dégagé sous forme gazeuse de la solution riche reste constante à l'entrée dans le condensateur (18).

4. Procédé cyclique selon l'une quelconque des revendications précédentes, **caractérisé en ce que** le frigorigène est de l'ammoniac et un solvant dans la solution est de l'eau.

5. Procédé cyclique selon l'une quelconque des revendications précédentes, **caractérisé en ce que** le frigorigène gazeuse au niveau de basse pression absorbe de la chaleur du frigorigène liquide au niveau de haute pression.

6. Machine frigorifique à absorption (1) qui dans un circuit de solution comprend un absorbeur (3), une pompe de solution (4), un échangeur de chaleur de solution (14), un bouilleur (5) avec un dispositif de chauffage et une soupape de solution (6) ainsi que des conduites de solution (7) pour conduire une solution riche à un niveau de basse pression de l'absorbeur (3) par la pompe de solution (4) et de là à un niveau de haute pression à travers l'échangeur de chaleur de solution (14) vers le bouilleur (5) et une solution pauvre au niveau de haute pression du bouilleur (5) à travers l'échangeur de chaleur de solution (14) dans la soupape de solution (6) et de là au niveau de basse pression vers l'absorbeur (3), ainsi qu'au moins un conduit de dérivation (28, 29), à travers lequel il est possible de faire passer un courant de dérivation de la solution riche parallèlement à l'échangeur de chaleur de solution (14), ainsi que dans une branche de frigorigène (16) un condensateur (18), un détendeur (19) et un évaporateur (20), ainsi que des conduites de frigorigène (21) pour conduire un frigorigène au niveau de haute pression du bouilleur (5) par le condensateur (18) dans le détendeur (19) et de là au niveau de basse pression par l'évaporateur (20) dans l'absorbeur (3), **caractérisée par** au moins une soupape de régulation (27, 30), avant l'échangeur de chaleur de solution (14), au moyen de laquelle pour régler une température d'eau chaude, à partir de laquelle la solution riche absorbe de la chaleur dans le bouilleur (5), le courant de dérivation peut être détourné de la solution riche dans au moins une conduite de dérivation (28, 29) à la sortie du bouilleur (5).

7. Machine frigorifique à absorption (1) selon la revendication précédente, **caractérisée en ce qu'**au moins une conduite de dérivation (28, 29) passe par un rectificateur (15) dans lequel la chaleur peut, au moyen de la solution riche, être extraite du frigorigène gazeux dégagé.
